# DEMANDE DE BREVET EUROPEEN

(11) **EP 4 187 726 A1**
(43) Date de publication de la demande: **31.05.2023**
(21) Numéro de dépôt: 21306656.6
(22) Date de dépôt: 29.11.2021
(51) Int. Cl.: H02B 13/045

(54) **PROCÉDÉ DE COLMATAGE D'UNE JONCTION À SURFACE ET CONTRE-SURFACE DE CONTACT D'UN ÉLÉMENT D'UN COMPARTIMENT DE POSTE ÉLECTRIQUE SOUS ENVELOPPE MÉTALLIQUE À ISOLATION GAZEUSE ET JONCTION RÉSULTANTE**

(71) Demandeur: RTE RESEAU DE TRANSPORT D'ELECTRICITE, 92073 Paris La Défense Cedex (FR)
(72) Inventeur: DURAND, Fabrice, 69500 Bron (FR)
(74) Mandataire: Bonnet, Michel

(57) **Abrégé**

Ce procédé de colmatage d'une jonction à surface et contre-surface de contact d'un élément d'un compartiment de poste électrique sous enveloppe métallique à isolation gazeuse comporte l'injection (200) d'un produit de colmatage dans un volume inter-joint formé entre la surface et la contre-surface de contact par utilisation d'un conduit de reprise de fuite débouchant dans le volume inter-joint. Lors de l'injection (200), le produit de colmatage se présente sous la forme d'un liquide dont la viscosité cinématique mesurée à 40°C sous 1 atm est supérieure ou égale à 3000 mm²/s. L'injection (200) se fait sous pression (204) par une pluralité d'augmentations successives (206) de la pression d'injection jusqu'à chasser tout gaz résiduel du volume inter-joint par fuite sous pression de ce gaz résiduel via au moins l'un des deux joints.

## Description

La présente invention concerne un procédé de colmatage d'une jonction à surface et contre-surface de contact d'un élément d'un compartiment de poste électrique sous enveloppe métallique à isolation gazeuse. Elle concerne également une jonction à surface et contre-surface de contact résultant d'un tel colmatage.

Dans ce contexte d'un élément de compartiment de PSEM (pour « Poste électrique Sous Enveloppe Métallique », de l'anglais GIS pour « Gas-Insulated Substation ») à isolation gazeuse, c'est généralement de l'hexafluorure de soufre ou SF₆ qui risque de fuir, ce gaz circulant sous pression dans le compartiment en tant qu'isolant électrique et éventuellement thermique performant. Or ce gaz, bien que non toxique et *a priori* inoffensif pour l'homme, est un gaz à effet de serre dont le pouvoir de réchauffement global est 22 800 fois supérieur à celui du dioxyde de carbone. Sa consommation présente également un coût. Il est donc important de prévenir ou éviter toute fuite d'un tel gaz dans l'atmosphère.

Dans des éléments de compartiment de PSEM complexes à portions raccordées entre elles ou à des organes de fin de course, les raccords se font à l'aide de jonctions à brides et contre-brides, de jonctions à arbres et alésages, de disques de rupture, de densistats, de galettes isolantes entre les brides, de joints d'étanchéité, et constituent les points faibles à partir desquels les fuites ont de fortes chances de se produire, surtout lorsque le gaz est présent sous pression dans le compartiment. Mais lorsque les fuites sont légères, diffuses et que le gaz est difficilement détectable parce qu'incolore ou inodore, elles restent la plupart du temps difficiles voire impossibles à localiser précisément.

Par ailleurs colmater de telles fuites tout en maintenant sous pression et sous tension le compartiment de PSEM sur lequel elles se produisent est souvent une opération délicate. Il est en effet généralement exclu, bien que ce soit pourtant la solution idéale, de démonter les assemblages pour revoir les portées et changer les joints. Notamment les canalisations et autres éléments de compartiment de PSEM sont délicats et longs à démonter. Il se pose également un problème d'indisponibilité de la totalité de l'ouvrage, en particulier d'une portion du réseau de transport d'électricité qui utilise de tels compartiments de PSEM lorsque ceux-ci doivent être démontés, ce qui engendre des désagréments importants en termes d'exploitation. De ce fait, il est nécessaire de proposer des solutions de colmatage sans démontage ni interruption de fonctionnement.

Plusieurs méthodes sont principalement connues pour résoudre au moins temporairement les problèmes de fuites gazeuses sur des jonctions à brides de canalisations de compartiments de PSEM sans interruption de leur fonctionnement, notamment en y maintenant la pression de gaz et la tension électrique.

Selon une première méthode, une bande de tissu, par exemple en tissu de verre imprégné de résine, est enroulée sur la jonction à brides et dans son voisinage de part et d'autre de la jonction de manière à former un garrot. Cette méthode de colmatage externe semble simple mais présente une difficulté de pause sous pression. Par ailleurs, l'état de surface de la jonction à brides doit être préparé afin de faciliter l'adhérence de la bande. Elle condamne en outre la jonction à brides de tout accès ultérieur et empêche son démontage. Enfin, un tel colmatage doit résister à la pression du gaz de fuite et ne tient généralement pas dans la durée.

Selon une deuxième méthode de colmatage externe, on crée une enceinte autour de la jonction à brides à l'aide d'un coffrage hermétique, cette enceinte constituant ainsi un organe de reprise de fuite disposé en aval de la zone de fuite, et on y injecte éventuellement, par une ouverture prévue à cet effet, une résine liquide polymérisable, un gaz sous pression ou un joint préformé. Non seulement le coffrage hermétique peut s'avérer lourd et encombrant, voire même impossible à poser par rapport à des contraintes de support, tirant ou charpente, mais en outre la fuite gazeuse reste confinée dans une enceinte à une pression au moins égale à celle de l'intérieur de la canalisation. Un colmatage de ce type a ainsi du mal à tenir dans la durée. De plus, dans le cas où l'enceinte est remplie de résine polymérisable, cela condamne tout accès ultérieur à la jonction à brides.

Selon une troisième méthode, un produit de colmatage est injecté entre les brides de la jonction. Plus précisément, une bride est perforée et le produit est injecté au niveau de la galette isolante. Le produit est censé faire le tour de la bride, combler les éventuels interstices et arrêter la fuite en formant une nouvelle étanchéité. Plusieurs modes de réalisation de cette méthode de colmatage interne sont par exemple enseignés dans le document de brevet FR 2 489 918 dans un contexte plus général que celui des compartiments de PSEM. Elle nécessite selon ce document un usinage spécifiquement prévu pour l'injection à la conception mais présente l'avantage de pouvoir profiter le cas échéant de la présence d'un conduit de reprise de fuite aménagé dans au moins l'une des brides de la jonction de canalisation pour réaliser l'injection.

Conformément aux principes généraux de cette troisième méthode, l'invention s'applique plus particulièrement à un procédé de colmatage d'une jonction à surface et contre-surface de contact d'un élément d'un compartiment de poste électrique sous enveloppe métallique à isolation gazeuse, cette jonction comportant deux joints d'étanchéité enserrés entre la surface et la contre-surface de contact, disposés de manière à former un volume inter-joint fermé délimité par les deux joints d'étanchéité et par la surface et la contre-surface de contact, le procédé de colmatage comportant l'injection d'un produit de colmatage dans le volume inter-joint par utilisation d'un conduit de reprise de fuite aménagé dans l'épaisseur du compartiment, ce conduit débouchant dans le volume inter-joint.

Mais pour qu'un tel colmatage soit complet et stable dans le temps, il faut que le gaz préexistant dans le volume inter-joint soit totalement chassé et remplacé par le produit de colmatage. Or la méthode enseignée dans le document FR 2 489 918 ne le prévoit pas et ne le permet pas non plus de façon simple et efficace. Des bulles gazeuses restent de façon quasi certaine dans le volume inter-joint après l'injection du produit de colmatage.

Il peut ainsi être souhaité de prévoir un procédé de colmatage d'une jonction à surface et contre-surface de contact qui permette de s'affranchir d'au moins une partie des problèmes et contraintes précités.

Il est donc proposé un procédé de colmatage d'une jonction à surface et contre-surface de contact d'un élément d'un compartiment de poste électrique sous enveloppe métallique à isolation gazeuse, cette jonction comportant deux joints d'étanchéité enserrés entre la surface et la contre-surface de contact, disposés de manière à former un volume inter-joint fermé délimité par les deux joints d'étanchéité et par la surface et la contre-surface de contact, le procédé de colmatage comportant l'injection d'un produit de colmatage dans le volume inter-joint par utilisation d'un conduit de reprise de fuite aménagé dans l'épaisseur du compartiment, ce conduit débouchant dans le volume inter-joint, selon lequel :
- le produit de colmatage se présente, lors de l'injection, sous la forme d'un liquide dont la viscosité cinématique mesurée à 40°C sous 1 atm est supérieure ou égale à 3000 mm²/s ; et
- l'injection se fait sous pression par une pluralité d'augmentations successives de la pression d'injection jusqu'à chasser tout gaz résiduel du volume inter-joint par fuite sous pression de ce gaz résiduel via au moins l'un des deux joints.

Il a été observé que de façon surprenante, la simple utilisation d'un produit de colmatage liquide de viscosité cinématique suffisante dans ce contexte de poste électrique sous enveloppe métallique à isolation gazeuse, c'est-à-dire une viscosité cinématique supérieure ou égale à 3000 mm²/s lorsqu'elle est mesurée à 40°C sous 1 atm, combinée à une augmentation progressive de la pression d'injection, permet d'améliorer efficacement la troisième méthode précitée. Notamment, bien que l'injection nécessite une pression finale largement supérieure à la pression atmosphérique compte tenu de la viscosité cinématique élevée du produit de colmatage, les augmentations successives de pression permettent un remplacement graduel de tout gaz résiduel par le produit de colmatage dans le volume inter-joint. Ce nouveau procédé de colmatage assure ainsi l'absence de toute bulle gazeuse dans le volume inter-joint grâce à cette montée en pression progressive qui est un gage du remplissage total du volume inter-joint.

De façon optionnelle, le produit de colmatage comporte une graisse de silicone dont la viscosité cinématique mesurée à 40°C sous 1 atm est comprise entre 3000 et 7000 mm2/s.

De façon optionnelle également, le produit de colmatage comporte des microparticules solides, notamment des microbilles de silice de tailles inférieures ou égales à 10 µm.

De façon optionnelle également, l'injection se fait par l'intermédiaire d'un graisseur à clapet anti-retour raccordé au conduit de reprise de fuite et maintenu en place après l'injection.

De façon optionnelle également, la pluralité d'augmentations successives comporte au moins dix augmentations successives d'au moins 1 bar chacune, de préférence au moins vingt augmentations successives d'au moins 1 bar chacune, à partir d'une première pression d'injection supérieure ou égale à 10 bars jusqu'à une dernière pression d'injection supérieure ou égale à 40 bars.

De façon optionnelle également :
- l'élément du compartiment de poste électrique sous enveloppe métallique est une canalisation ou extrémité de canalisation dans laquelle passent des composants électriques sous une atmosphère gazeuse isolante, notamment une atmosphère d'hexafluorure de soufre ;
- la jonction est une jonction à bride et contre-bride de cette canalisation ou extrémité de canalisation et elle comporte les deux joints d'étanchéité enserrés entre deux surfaces planes de contact respectives de la bride et de la contre bride ; et
- l'un des deux joints d'étanchéité, dit joint intérieur, étant disposé à l'intérieur d'un espace délimité par l'autre des deux joints d'étanchéité, dit joint extérieur, de manière à former le volume inter-joint, le procédé de colmatage comporte l'utilisation du conduit de reprise de fuite qui est aménagé dans au moins l'une de la bride et la contre-bride.

De façon optionnelle également, la pluralité d'augmentations successives de la pression d'injection se fait alors jusqu'à une pression d'injection maximale d'au moins 60 bars.

De façon optionnelle également :
- l'élément du compartiment de poste électrique sous enveloppe métallique est un sectionneur ;
- la jonction est une jonction à arbre et alésage de ce sectionneur et elle comporte les deux joints d'étanchéité enserrés entre deux surfaces cylindriques de contact respectives de l'arbre et de l'alésage ; et
- les deux joints d'étanchéité étant disposés à distance l'un de l'autre autour de l'arbre de manière à former le volume inter-joint, le procédé de colmatage comporte l'utilisation du conduit de reprise de fuite qui est aménagé dans l'épaisseur du compartiment dans lequel est formé l'alésage.

De façon optionnelle également, la pluralité d'augmentations successives de la pression d'injection se fait alors jusqu'à une pression d'injection maximale d'au plus 50 bars.

Il est également proposé une jonction à surface et contre-surface de contact d'un élément d'un compartiment de poste électrique sous enveloppe métallique à isolation gazeuse, comportant :
- deux joints d'étanchéité enserrés entre la surface et la contre-surface de contact, disposés de manière à former un volume inter-joint fermé délimité par les deux joints d'étanchéité et par la surface et la contre-surface de contact ;
- un produit de colmatage injecté sous pression dans le volume inter-joint par utilisation d'un conduit de reprise de fuite aménagé dans l'épaisseur du compartiment, ce conduit débouchant dans le volume inter-joint ;
dans laquelle le produit de colmatage se présente, dans le volume inter-joint qu'il remplit entièrement sans gaz résiduel, sous la forme d'un liquide dont la viscosité cinématique mesurée à 40°C sous 1 atm est supérieure ou égale à 3000 mm2/s

L'invention sera mieux comprise à l'aide de la description qui va suivre, donnée uniquement à titre d'exemple et faite en se référant aux dessins annexés dans lesquels :
- la figure 1 représente schématiquement la structure générale d'un exemple non limitatif de compartiment de poste électrique sous enveloppe métallique à isolation gazeuse (ou compartiment de PSEM) présentant plusieurs jonctions à bride et contre-bride de portions ou extrémités de canalisation,
- la figure 2 représente schématiquement en coupe le détail d'un élément sectionneur de l'une des portions ou extrémité de canalisation du compartiment de PSEM de la figure 1,
- la figure 3 représente l'élément sectionneur de la figure 2 selon une autre coupe montrant une jonction à arbre et alésage de ce sectionneur,
- la figure 4 représente schématiquement en vue de face la bride, ou la contre-bride, d'une jonction à bride et contre-bride du compartiment de PSEM de la figure 1,
- la figure 5 illustre les étapes successives d'un procédé de colmatage d'une jonction à surface et contre-surface de contact d'un élément du compartiment PSEM de la figure 1, selon un mode de réalisation de l'invention,
- la figure 6 représente schématiquement la configuration générale d'une installation permettant l'exécution du procédé de la figure 5, et
- la figure 7 représente schématiquement en coupe la structure générale d'un exemple non limitatif de jonction à surface et contre-surface de contact d'un élément de compartiment de PSEM, selon un mode de réalisation de l'invention.

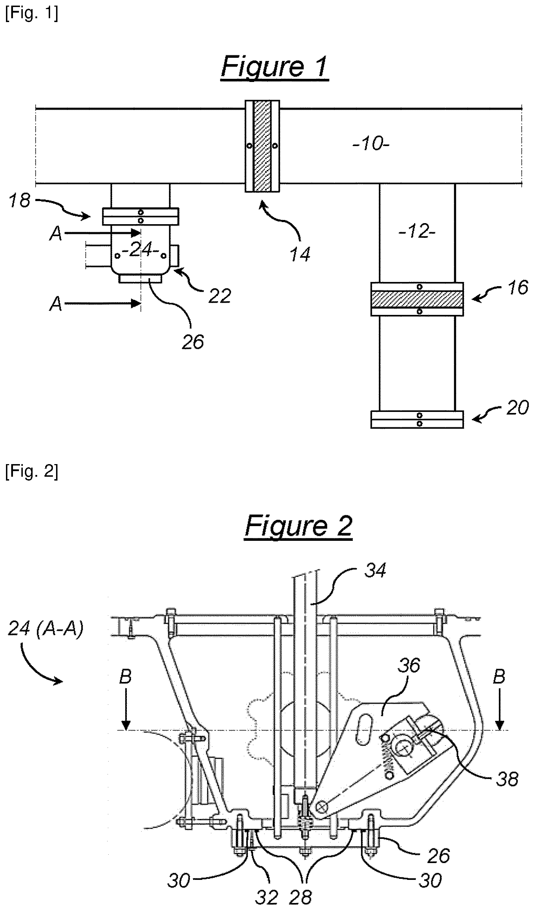

L'installation illustrée sur la figure 1 comporte une canalisation renfermant un gaz sous pression. Il s'agit d'une canalisation d'un compartiment de poste électrique sous enveloppe métallique à isolation gazeuse, autrement dit un compartiment de PSEM, dans laquelle passent notamment des câbles ou autres composants électriques sous une atmosphère gazeuse isolante d'hexafluorure de soufre.

Cette canalisation présente, à titre d'exemple purement illustratif et non limitatif, une branche principale 10, s'étendant horizontalement sur la figure 1, et une branche secondaire 12 s'étendant vers le bas depuis la branche principale 10. Elle présente en particulier différentes zones de fuites potentielles de gaz sous pression, notamment aux jonctions de brides de raccordement longitudinal de portions de canalisation, aux jonctions de brides de portions de canalisation ou de piquage cylindrique sur canalisation et de disques de rupture ou de densistat, ou aux jonctions à arbres et alésages formées dans le compartiment PSEM. Toutes ces jonctions présentent des joints d'étanchéités non visibles sur la figure 1, incluant au moins un premier joint d'étanchéité, dit joint intérieur, entre l'intérieur du compartiment de PSEM comportant le gaz sous pression et un volume inter-joint fermé, et un deuxième joint d'étanchéité, dit joint extérieur, entre le volume inter-joint fermé et l'extérieur du compartiment de PSEM.

Par exemple, la canalisation illustrée sur la figure 1 présente deux zones dans chacune desquelles deux brides de raccordement longitudinal de deux portions de canalisation sont plaquées et vissées hermétiquement l'une contre l'autre, éventuellement par l'intermédiaire d'une galette isolante. La première zone 14 est situées dans la branche principale 10 et la deuxième zone 16 est située dans la branche secondaire 12. Elles comportent effectivement chacune une bride, une contre-bride et une galette isolante s'interposant entre la bride et la contre-bride.

La canalisation présente en outre une troisième zone 18 dans laquelle une bride de piquage cylindrique sur canalisation et une bride de sectionneur sont plaquées et vissées hermétiquement l'une contre l'autre, éventuellement par l'intermédiaire d'une galette isolante. Cette troisième zone 18 est située dans la branche principale 10. Elle est à bride et contre-bride mais illustrée sans galette isolante.

La canalisation présente en outre une quatrième zone 20 dans laquelle une bride de portion de canalisation et un disque de rupture ou de densistat sont plaqués et vissés hermétiquement l'un contre l'autre, éventuellement par l'intermédiaire d'une galette isolante. Cette quatrième zone 20 est située à l'extrémité libre de la branche secondaire 12. Elle est à bride et contre-bride mais illustrée sans galette isolante.

La canalisation présente en outre une cinquième zone 22 dans laquelle un arbre d'entraînement de sectionneur est introduit, libre en rotation mais de façon hermétique à l'aide de joints d'étanchéité, dans un alésage formé dans de compartiment de PSEM. Cette cinquième zone 22 est située sur le sectionneur, luimême identifié par la référence 24, raccordé au piquage cylindrique de la branche principale 10. Elle est illustrée en détail dans la figure 2 selon une coupe A-A du sectionneur 24 indiquée dans la figure 1.

D'autres zones de fuites potentielles sont présentes dans la canalisation illustrée par la figure 1, telles que la portion inférieure du sectionneur 24 qui présente un disque de rupture 26, mais elles ne seront pas toutes détaillées.

Chacune des zones 14, 16, 18, 20 et 22 précitées constitue une fragilité de la canalisation pouvant présenter des fuites de gaz sous pression. C'est effectivement considéré comme étant le cas dans l'exemple de la figure 1. Ainsi, chacune de ces zones est pourvue d'organes de reprise de fuite, notamment sous la forme de conduits de reprise de fuite aménagés dans l'épaisseur du compartiment de PSEM.

Ces conduits permettent, lors de l'assemblage des éléments de canalisation précités, de vérifier au fur et à mesure du montage que les joints d'étanchéité, qui sont enserrés entre ces éléments à assembler de manière à former les volumes inter-joints précités, sont montés correctement. En effet, en mettant en pression chaque volume inter-joint par la reprise de fuite correspondante et en contrôlant avec un niveau à bulle la tenue en pression, la bonne mise en place de ces joints d'étanchéité peut être vérifiée et validée. Les conduits de reprise de fuite n'ont généralement pas d'autre fonction mais peuvent être avantageusement réutilisés pour réaliser un colmatage après montage.

Ainsi, de façon connue en soi, la bride et la contre-bride de la première zone 14 comportent chacune un conduit de reprise de fuite ouvert sur leur paroi latérale cylindrique extérieure et débouchant dans un volume inter-joint fermé délimité par deux joints d'étanchéité concentriques, une surface de contact de la bride (ou respectivement de la contre-bride) et une surface de contact correspondante de la galette isolante. Il en est de même pour la bride et la contre-bride de la deuxième zone 16.

De façon connue en soi également, la bride et la contre-bride de la troisième zone 18 comportent chacune un conduit de reprise de fuite ouvert sur leur paroi latérale cylindrique et débouchant dans un volume inter-joint fermé délimité par deux joints d'étanchéité concentriques, une surface de contact de la bride et une surface de contact correspondante de la contre-bride. Il en est de même pour la bride et la contre-bride de la quatrième zone 20.

Enfin, de façon connue en soi également, le sectionneur 24 comporte au moins deux conduits de reprise de fuite ouverts sur sa paroi extérieure et débouchant chacun dans un volume inter-joint fermé délimité par deux joints d'étanchéité disposés à distance l'un de l'autre autour de l'arbre d'entraînement et enserrés entre deux surfaces cylindriques de contact respectives de l'arbre d'entraînement et de l'alésage dans lequel il est introduit.

La coupe A-A du sectionneur 24 représentée sur la figure 2 montre de façon plus précise la configuration du disque de rupture 26. Il est vissé contre une surface de contact correspondante en partie inférieure du sectionneur 24. Pour étanchéifier la jonction, deux joints d'étanchéité concentriques et par exemple toriques sont enserrés entre une face supérieure du disque de rupture et la surface de contact du sectionneur 24. Le premier de ces deux joints, formant joint intérieur 28, est disposé à l'intérieur de l'espace délimité par le deuxième de ces deux joints, formant joint extérieur 30, de manière à former un volume inter-joint fermé. L'accès à ce volume inter-joint est matérialisé par un conduit de reprise de fuite 32 fermé dans la figure 2 par une vis moletée.

La coupe A-A du sectionneur 24 représentée sur la figure 2 montre également une tige de sectionnement 34 entraînée en translation verticale à l'intérieur du compartiment de PSEM par une came 36 elle-même entraînée en rotation par un arbre d'entraînement 38.

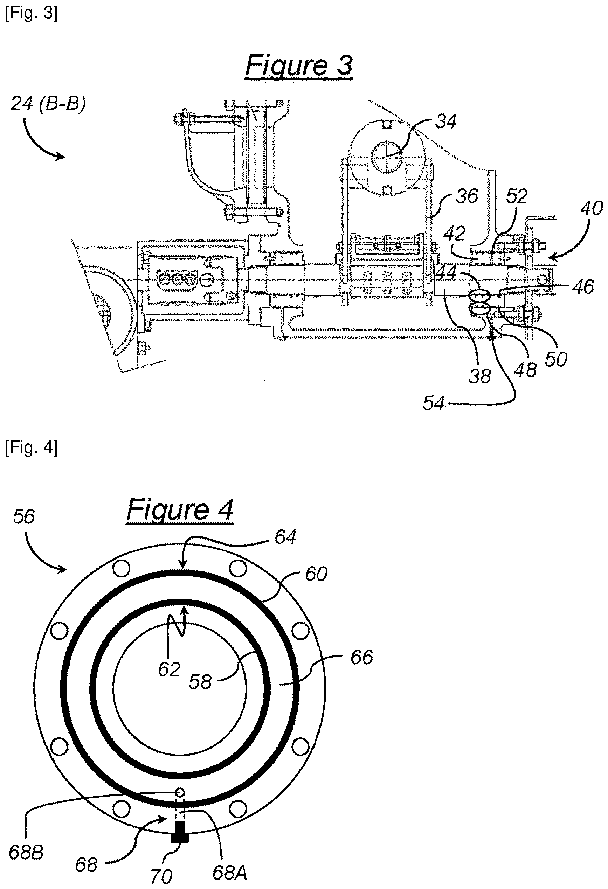

L'arbre d'entraînement 38 et son intégration dans un alésage 40 du sectionneur 24 sont détaillés dans la figure 3 selon une coupe B-B indiquée dans la figure 2.

Au niveau de l'alésage 40 situé en partie droite de la figure 3, l'arbre d'entraînement 38 est muni d'une couronne jointive 42. Cette dernière présente une surface interne cylindrique de contact avec la surface externe cylindrique de l'arbre d'entraînement 38. La jonction est rendue étanche à l'aide de deux joints d'étanchéité intérieurs toriques 44 disposés autour de l'arbre d'entraînement 38 à distance d'un joint d'étanchéité extérieur torique 46 de même diamètre également disposé autour de l'arbre d'entraînement 38 de manière à former un premier volume inter-joint autour de l'arbre d'entraînement 38.

La couronne jointive 42 présente en outre une surface externe cylindrique de contact avec la surface interne cylindrique de l'alésage 40. La jonction est rendue étanche à l'aide de deux joints d'étanchéité intérieurs toriques 48 disposés autour de la couronne jointive 42 à distance d'un joint d'étanchéité extérieur torique 50 de même diamètre également disposé autour de la couronne jointive 42 de manière à former un deuxième volume inter-joint autour de de la couronne jointive 42.

On notera que les deux volumes inter-joints ainsi créés contre les surfaces interne et externe de la couronne jointive 42 communiquent entre eux par au moins un canal 52 creusé dans son épaisseur. Un tel canal 52 est visible dans la figure 3 en partie supérieure de la couronne jointive 42. De plus, l'accès au deuxième volume inter-joint est matérialisé par un conduit de reprise de fuite 54, fermé dans la figure 3 par une vis moletée, creusé dans l'épaisseur de la paroi du sectionneur 24.

On notera également que l'arbre d'entraînement 38 est intégré de la même manière dans un autre alésage situé en partie gauche de la figure 3. Les éléments d'intégration étant les mêmes par symétrie, ils ne seront pas détaillés.

La bride 56, ou contre-bride, d'une jonction à bride et contre-bride de canalisation est représentée schématiquement en vue de face sur la figure 4. Un système d'étanchéité à joints toriques y est prévu.

Plus précisément, deux joints toriques 58, 60 concentriques sont disposés dans deux canaux annulaires respectifs 62, 64 prévus à cet effet dans la face de contact de la bride 56 (ou contre-bride) pour rendre étanche le contact avec la contre-bride (ou bride) correspondante, ou avec la galette isolante correspondante le cas échéant. Le premier joint intérieur torique 58 de moindre diamètre, prévu pour assurer une étanchéité au gaz sous pression à l'intérieur de la canalisation, est disposé dans le premier canal 62 de moindre diamètre creusé dans la face de contact de la bride ou contre-bride 56. Le deuxième joint extérieur torique 60 de diamètre supérieur, prévu pour assurer une étanchéité extérieure, en particulier une étanchéité à la pluie, est disposé dans le deuxième canal 64 de diamètre supérieur creusé lui aussi dans la face de contact de la bride ou contre-bride 56. Un volume inter-joint fermé 66 est ainsi créé entre la face de contact de la bride ou contre-bride 56, la face de contact de la contre-bride (ou bride) ou galette isolante correspondante, le premier joint intérieur torique 58 et le deuxième joint extérieur torique 60.

De façon connue en soi également, un conduit en « L » de reprise de fuite 68 est aménagé dans la bride ou contre-bride 56. Une portion radiale 68A de ce conduit traverse la bride ou contre-bride 56 dans son épaisseur depuis la surface latérale extérieure cylindrique de la bride jusqu'à une profondeur située entre les premier (58) et deuxième (60) joints toriques. Une portion transversale 68B de ce conduit, orthogonale au plan de la figure 4, s'étend à l'intérieur de la bride ou contre-bride 56 orthogonalement depuis la portion radiale 68A vers le volume inter-joint 66. Le conduit en « L » de reprise de fuite 68 relie ainsi l'extérieur de la bride ou contre-bride 56 au volume inter-joint 66 sans percer le joint extérieur 60. Dans la figure 4, il est représenté fermé par une vis moletée 70

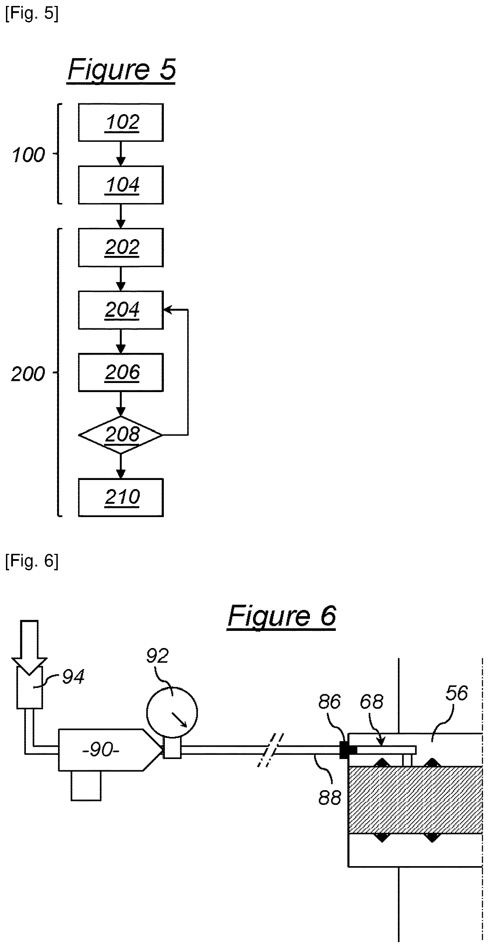

Un procédé de colmatage d'une jonction à surface et contre-surface de contact d'un élément du compartiment PSEM de la figure 1 va maintenant être décrit en référence à la figure 5.

Ce procédé s'applique à la jonction précitée entre la partie inférieure du sectionneur 24 et le disque de rupture 26 puisque cette jonction comporte deux joints d'étanchéité 28, 30 enserrés entre la surface et la contre-surface de contact, disposés de manière à former un volume inter-joint fermé accessible par un conduit de reprise de fuite 32, comme cela a été décrit précédemment en référence à la figure 2.

Il s'applique également à la jonction précitée entre l'arbre d'entraînement 38 et l'alésage 40 via la couronne jointive 42 puisque cette jonction comporte six joints d'étanchéité 44, 46, 48, 50 enserrés entre les deux paires de surfaces et contre-surfaces de contact, disposés de manière à former deux volumes inter-joint communicants et fermés accessibles par un conduit de reprise de fuite 54, comme cela a été décrit précédemment en référence à la figure 3.

Mais ce procédé va être plus précisément détaillé pour une jonction à bride et contre-bride telle que par exemple l'une quelconque des jonctions des zones 14, 16, 18 et 20 de la figure 1 qui elles aussi présentent des volumes inter-joint accessibles par des conduits de reprise de fuite, comme cela a été décrit ci-dessus en référence à la figure 4. Il est aisément généralisable aux jonctions des figures 2 et 3, ainsi qu'à toute jonction présentant un volume inter-joint fermé accessible par un conduit de reprise de fuite.

Un procédé de colmatage selon la présente invention comporte en outre essentiellement deux phases. Une première phase préliminaire 100 de préparation et une deuxième phase 200 d'injection proprement dite de produit de colmatage.

La phase préliminaire 100 commence par une étape 102 de montage d'une installation d'injection de produit de colmatage. Un exemple non limitatif d'une telle installation est par exemple illustré sur la figure 6.

Au cours de cette étape de montage 102, la vis moletée 70 est tout d'abord retirée du conduit de reprise de fuite 68 de la bride ou contre-bride 56 et remplacée par un élément 86 de raccord de tuyau d'alimentation en produit de colmatage, par exemple un graisseur à clapet anti-retour. Dans ce cas, il est avantageux de prévoir plusieurs graisseurs de diamètres différents pour s'adapter à toutes les configurations possibles.

Un tuyau d'alimentation 88, par exemple souple et de longueur comprise entre 1 et 2 mètres, est raccordé à un injecteur motorisé 90, par exemple un pistolet d'injection à cartouche(s) de produit de colmatage, muni à son extrémité d'injection d'un manomètre 92 pour le contrôle de la pression d'injection. Enfin, l'injecteur motorisé 90 est raccordé à un compresseur 94 qui commande les éventuelles variations de la pression d'injection.

Au cours d'une étape suivante 104 de la phase préliminaire 100, le produit de colmatage est préparé.

Conformément aux principes généraux de la présente invention, le produit de colmatage est judicieusement choisi pour se présenter, lors de l'injection, sous la forme d'un liquide dont la viscosité cinématique mesurée à 40°C sous 1 atm est supérieure ou égale à 3000 mm²/s, c'est-à-dire un fluide incompressible dont la haute viscosité permet de combler les fuites au fur et à mesure de son injection dans le volume inter-joint 66.

Plus précisément, selon un mode de réalisation avantageux mais non limitatif, le produit de colmatage comporte une huile ou une graisse, par exemple une graisse de silicone ou de fluoro-silicone dont la viscosité cinématique mesurée à 40°C sous 1 atm est comprise entre 3000 et 7000 mm²/s.

Avantageusement également, le produit de colmatage comporte des microparticules solides qui remplissent une fonction d'épaississant, notamment des microbilles de silice de tailles inférieures ou égales à 10 µm. De telles particules peuvent aider au colmatage en s'accumulant mécaniquement sur les zones de fuites.

Dans ce cas, il est en outre avantageux de choisir un produit de colmatage présentant une bonne résistance à la séparation entre l'huile ou la graisse, d'une part, et les microparticules épaississantes, d'autre part. Il s'agit d'une valeur de séparation généralement indiquée dans les huiles ou graisses à épaississant du commerce.

Enfin, il est avantageux que le produit de colmatage ait une bonne résistance à l'eau (par exemple évaluée à 0-90 selon la norme DIN 51 807 pt.1) et aux températures extrêmes (par exemple une plage d'utilisation incluant [-20°C ; +100°C]).

La composition d'un tel produit de colmatage à graisse de silicone et microbilles de silice ne sera pas davantage détaillée parce qu'il en existe dans le commerce et que cette composition est généralement donnée par le fabricant. Les propriétés de viscosité et optionnellement de contenance en microparticules solides précitées suffisent à expliquer l'effet d'une telle graisse sur le bon colmatage du volume inter-joint 66, sous réserve d'appliquer en outre un protocole d'injection judicieux, comme cela sera détaillé par la suite.

Avec un tel choix de produit de colmatage, il est avantageux d'utiliser des joints 58, 60 en matériau butadiène acrylonitrile ou NBR (de l'anglais « Nitrile Butadienne Rubber ») connu pour sa très bonne tenue aux huiles et graisses. Cependant, en raison du nombre élevé de doubles liaisons dans la macromolécule, ce matériau est sensible au vieillissement thermo-oxydant, à l'ozone et aux radiations ultra-violet. Il est également avantageux d'utiliser des joints 58, 60 en matériau éthylène-propylène-diène monomère ou EPDM (de l'anglais « Ethylene Propylene Diene Monomer »). Ce matériau est moins stable au contact d'une huile ou graisse mais, grâce à sa faible teneur en liaisons insaturées (chaîne saturée), il est moins sensible à la température, l'humidité, l'oxygène, l'ozone et les radiations ultra-violet et donc au vieillissement. De plus, certains fabricants de joints EPDM choisissent un peroxyde organique comme agent de vulcanisation ayant pour effet une amélioration à la résistance au vieillissement du caoutchouc final par rapport à l'EPDM vulcanisé au soufre. Et certaines huiles ou graisses sont spécifiquement conçues pour ne pas détériorer les joints NBR ou EPDM.

Le produit de colmatage est placé dans une cartouche d'injection adaptée pour une insertion dans l'injecteur motorisé 90. En variante et afin de travailler plus rapidement et plus simplement, il est fourni en cartouche prête à l'emploi. L'étape de préparation 104 se résume alors au placement de la cartouche prête à l'emploi dans l'injecteur motorisé 90.

La deuxième phase 200 d'injection proprement dite de produit de colmatage peut alors démarrer.

Au cours d'une première étape 202 de la deuxième phase 200, le compresseur 94 est réglé à une première pression de consigne Pmin, de préférence supérieure ou égale à 10 bars, celle-ci étant en outre mesurée en sortie de l'injecteur motorisé 90 par le manomètre 92 lorsque ce dernier est prévu. Une pression maximale Pmax est également définie à cette occasion, par exemple de 60 bars ou plus. Une telle valeur de pression maximale convient pour une jonction à joints compressés axialement telle que la jonction de canalisation à bride et contre-bride de la figure 4.

Au cours d'une deuxième étape 204 de la deuxième phase 200, le produit de colmatage est injecté par l'injecteur motorisé 90 dans le volume inter-joint 66. Cette injection est réalisée sous la pression de consigne du compresseur 94, notamment par pressions successives en cycles éventuellement surveillées par le manomètre 92, jusqu'à rencontrer une certaine résistance dans le remplissage du volume inter-joint 66. A ce stade, il est quasiment rempli mais du gaz résiduel peut y être encore présent. La pression peut alors légèrement baisser en raison d'une fuite de ce gaz résiduel via l'un des deux joints 58 ou 60.

Puis la pression de consigne est augmentée d'une valeur ΔP, par exemple 1 bar ou quelques bars, au cours d'une étape 206.

Au cours d'une étape de test 208 suivante, la pression mesurée au manomètre 92, ou à défaut réglée sur le compresseur 94, est comparée à la valeur Pmax. Si la valeur Pmax n'est pas atteinte de façon stable, le procédé reprend à l'étape 204 sous la pression augmentée.

Le produit de colmatage est ainsi injecté sous pression par une pluralité d'augmentations successives de la pression d'injection. C'est cette augmentation progressive de pression, combinée à une viscosité suffisante du produit de colmatage, qui permet de chasser petit à petit tout gaz résiduel du volume inter-joint 66 par fuite sous pression de ce gaz résiduel via au moins l'un des deux joints 58 et 60.

A titre d'exemple non limitatif, les valeurs de Pmin, ΔP et Pmax peuvent être définies pour que la pluralité d'augmentations successives comporte au moins dix augmentations successives d'au moins 1 bar chacune, de préférence au moins vingt augmentations successives d'au moins 1 bar chacune jusqu'à une pression maximale stable Pmax d'au moins 40 bars.

Si à l'étape de test 208 la pression mesurée atteint ou dépasse la valeur Pmax de façon stable, alors il peut être considéré qu'il ne reste plus de gaz résiduel dans le volume inter-joint 66 et le procédé se termine lors d'une dernière étape de démontage 210.

Au cours de cette étape 210, l'installation de la figure 6 est démontée, seul l'élément de raccord 86 pouvant être éventuellement maintenu, notamment lorsqu'il est à clapet anti-retour, pour d'éventuelles futures reprises de colmatage.

Deux configurations sont possibles à ce stade :
- tout est démonté et la vis moletée 70 est réintroduite dans le conduit de reprise de fuite 68, ou
- l'élément de raccord 86 est maintenu, notamment lorsqu'il s'agit d'un graisseur à clapet anti-retour.

Il convient de noter que la deuxième configuration permet une reprise immédiate du colmatage si nécessaire, notamment en cas d'apparition de fuite ultérieure. Elle permet également d'identifier que la jonction concernée a déjà été colmatée. Elle permet enfin de maintenir le produit de colmatage sous pression Pmax dans le volume inter-joint 66.

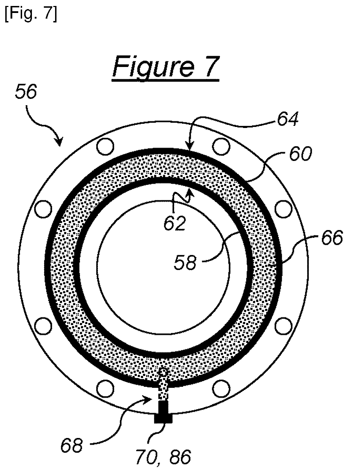

A la fin de l'exécution du procédé de colmatage décrit précédemment, la jonction à bride et contre-bride illustrée dans les figures 4 et 6 se présente sous la forme illustrée schématiquement sur la figure 7.

Elle comporte les deux joints d'étanchéité 58 et 60 enserrés entre la bride ou contre-bride 56 et l'autre surface de contact correspondante (respectivement contre-bride ou bride ou galette isolante), disposés de manière à former le volume inter-joint fermé 66 délimité par les deux joints d'étanchéité 58, 60 et par les surface et contre-surface de contact.

Elle comporte en outre le produit de colmatage, notamment en graisse de silicone à microbilles de silice, injecté sous pression dans le volume inter-joint 66 par utilisation du conduit de reprise de fuite 68 qui débouche dans le volume inter-joint 66.

Enfin, le conduit de reprise de fuite 68 est rebouché à l'aide soit de la vis moletée 70 soit de l'élément de raccordement 86, en particulier lorsqu'il s'agit d'un élément à clapet anti-retour.

Ce résultat visible sur la jonction à bride et contre-bride de la figure 7 est, comme indiqué précédemment, généralisable à toute jonction à surface et contre-surface de contact d'un élément d'un compartiment de PSEM comportant (au moins) deux joints d'étanchéité enserrés entre la surface et la contre-surface de contact, disposés de manière à former un volume inter-joint fermé délimité par les deux joints d'étanchéité et par la surface et la contre-surface de contact, et un conduit de reprise de fuite aménagé dans l'épaisseur du compartiment pour déboucher dans le volume inter-joint. Il est notamment généralisable à toutes les jonctions évoquées en référence aux figures 1 à 3.

En ce qui concerne le cas particulier d'une jonction à arbre et alésage de sectionneur, la pression Pmax peut être inférieure à la valeur précitée, par exemple égale à 40 bars ou un peu plus mais restant inférieure à 50 bars. Une telle valeur de pression maximale convient plus généralement pour une jonction à joints compressés radialement.

Il apparaît clairement qu'un procédé de colmatage tel que celui décrit précédemment permet un colmatage interne simple à mettre en œuvre, rapide et efficace qui combine un choix judicieux de viscosité du produit de colmatage avec une montée progressive de la pression d'injection de manière à assurer sans dommages l'absence de toute bulle gazeuse résiduelle dans le volume inter-joint après colmatage.

On peut en outre noter les avantages supplémentaires suivants :
- un tel procédé peut être mis en oeuvre dès lors qu'une jonction à surface et contre-surface de contact, à deux joints d'étanchéité enserrés entre la surface et la contre-surface de contact et à conduit de reprise de fuite débouchant dans le volume inter-joint présente une fuite, que celle-ci soit localisée ou non,
- l'utilisation d'une huile ou d'une graisse qui conserve son état liquide dans le temps rend le colmatage réversible sans risque d'endommager la jonction,
- le coût final d'un tel colmatage, en outils réutilisables (compresseur, injecteur motorisé, manomètre), consommables (cartouches, tuyaux et éléments de raccordement) et main d'œuvre, est très inférieur à ce qui est proposé dans l'état de la technique dans la mesure où cela permet en plus de ne pas consigner l'ouvrage, l'exploitation de ce dernier pouvant ainsi se poursuivre,
- le colmatage résultant s'avère tout aussi efficace dans le temps (à l'échelle de plusieurs années),
- il permet de prolonger la durée de vie des assemblages concernés sans remise à niveau plus lourde à mettre en œuvre.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué. Dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de l'homme de l'art en appliquant ses connaissances générales à la mise en œuvre de l'enseignement qui vient de lui être divulgué.

## Revendications

1. Procédé de colmatage d'une jonction (14, 16, 18, 20, 22, 26) à surface et contre-surface de contact d'un élément (10, 12, 24) d'un compartiment de poste électrique sous enveloppe métallique à isolation gazeuse, cette jonction comportant deux joints d'étanchéité (28, 30 ; 44, 46, 48, 50 ; 58, 60) enserrés entre la surface et la contre-surface de contact (26 ; 38, 40, 42 ; 56), disposés de manière à former un volume inter-joint fermé (66) délimité par les deux joints d'étanchéité (28, 30 ; 44, 46, 48, 50 ; 58, 60) et par la surface et la contre-surface de contact (26 ; 38, 40, 42 ; 56), le procédé de colmatage comportant l'injection (200) d'un produit de colmatage dans le volume inter-joint (66) par utilisation d'un conduit de reprise de fuite (32 ; 54 ; 68) aménagé dans l'épaisseur du compartiment, ce conduit (32 ; 54 ; 68) débouchant dans le volume inter-joint (66), **caractérisé en ce que** :
- le produit de colmatage se présente, lors de l'injection (200), sous la forme d'un liquide dont la viscosité cinématique mesurée à 40°C sous 1 atm est supérieure ou égale à 3000 mm²/s ; et
- l'injection (200) se fait sous pression (204) par une pluralité d'augmentations successives (206) de la pression d'injection jusqu'à chasser tout gaz résiduel du volume inter-joint (66) par fuite sous pression de ce gaz résiduel via au moins l'un des deux joints (28, 30 ; 44, 46, 48, 50 ; 58, 60).

2. Procédé de colmatage selon la revendication 1, dans lequel le produit de colmatage comporte une graisse de silicone dont la viscosité cinématique mesurée à 40°C sous 1 atm est comprise entre 3000 et 7000 mm²/s.

3. Procédé de colmatage selon la revendication 1 ou 2, dans lequel le produit de colmatage comporte des microparticules solides, notamment des microbilles de silice de tailles inférieures ou égales à 10 µm.

4. Procédé de colmatage selon l'une quelconque des revendications 1 à 3, dans lequel l'injection (200) se fait par l'intermédiaire d'un graisseur à clapet anti-retour (86) raccordé au conduit de reprise de fuite (32 ; 54 ; 68) et maintenu en place après l'injection.

5. Procédé de colmatage selon l'une quelconque des revendications 1 à 4, dans lequel la pluralité d'augmentations successives (206) comporte au moins dix augmentations successives d'au moins 1 bar chacune, de préférence au moins vingt augmentations successives d'au moins 1 bar chacune, à partir d'une première pression d'injection supérieure ou égale à 10 bars jusqu'à une dernière pression d'injection supérieure ou égale à 40 bars.

6. Procédé de colmatage selon l'une quelconque des revendications 1 à 5, dans lequel :
- l'élément du compartiment de poste électrique sous enveloppe métallique est une canalisation ou extrémité de canalisation (10, 12) dans laquelle passent des composants électriques sous une atmosphère gazeuse isolante, notamment une atmosphère d'hexafluorure de soufre ;
- la jonction est une jonction à bride et contre-bride (14, 16, 18, 20) de cette canalisation ou extrémité de canalisation (10, 12) et elle comporte les deux joints d'étanchéité (58, 60) enserrés entre deux surfaces planes de contact respectives de la bride et de la contre bride ; et
- l'un des deux joints d'étanchéité, dit joint intérieur (58), étant disposé à l'intérieur d'un espace délimité par l'autre des deux joints d'étanchéité, dit joint extérieur (60), de manière à former le volume inter-joint (66), le procédé de colmatage comporte l'utilisation du conduit de reprise de fuite (68) qui est aménagé dans au moins l'une (56) de la bride et la contre-bride.

7. Procédé de colmatage selon la revendication 6, dans lequel la pluralité d'augmentations successives (206) de la pression d'injection se fait jusqu'à une pression d'injection maximale d'au moins 60 bars.

8. Procédé de colmatage selon l'une quelconque des revendications 1 à 6, dans lequel :
- l'élément du compartiment de poste électrique sous enveloppe métallique est un sectionneur (24) ;
- la jonction est une jonction à arbre (38) et alésage (40) de ce sectionneur (24) et elle comporte les deux joints d'étanchéité (44, 46, 48, 50) enserrés entre deux surfaces cylindriques de contact respectives de l'arbre (38) et de l'alésage (40) ; et
- les deux joints d'étanchéité (44, 46, 48, 50) étant disposés à distance l'un de l'autre autour de l'arbre (38) de manière à former le volume inter-joint, le procédé de colmatage comporte l'utilisation du conduit de reprise de fuite (54) qui est aménagé dans l'épaisseur du compartiment dans lequel est formé l'alésage (40).

9. Procédé de colmatage selon la revendication 8, dans lequel la pluralité d'augmentations successives (206) de la pression d'injection se fait jusqu'à une pression d'injection maximale d'au plus 50 bars.

10. Jonction à surface et contre-surface de contact (26 ; 38, 40, 42 ; 56) d'un élément d'un compartiment de poste électrique sous enveloppe métallique à isolation gazeuse, comportant :
- deux joints d'étanchéité (28, 30 ; 44, 46, 48, 50 ; 58, 60) enserrés entre la surface et la contre-surface de contact (26 ; 38, 40, 42 ; 56), disposés de manière à former un volume inter-joint fermé (66) délimité par les deux joints d'étanchéité (28, 30 ; 44, 46, 48, 50 ; 58, 60) et par la surface et la contre-surface de contact (26 ; 38, 40, 42 ; 56) ;
- un produit de colmatage injecté sous pression dans le volume inter-joint (66) par utilisation d'un conduit de reprise de fuite (32 ; 54 ; 68) aménagé dans l'épaisseur du compartiment, ce conduit (32 ; 54 ; 68) débouchant dans le volume inter-joint (66) ;
**caractérisée en ce que** le produit de colmatage se présente, dans le volume inter-joint (66) qu'il remplit entièrement sans gaz résiduel, sous la forme d'un liquide dont la viscosité cinématique mesurée à 40°C sous 1 atm est supérieure ou égale à 3000 mm²/s.
